# EUROPEAN PATENT SPECIFICATION

(11) **EP 3 308 060 B1**
(45) Date of publication and mention of the grant of the patent: **01.01.2020**
(21) Application number: 16739550.8
(22) Date of filing: 30.05.2016
(51) Int. Cl.: F16J 15/324, F16J 15/3276, F16J 15/3284, F16J 15/34

(54) **SEALING RING**
DICHTUNGSRING
BAGUE D'ÉTANCHÉITÉ

(30) Priority: 12.06.2015 IT UB20151162
(43) Date of publication of application: 18.04.2018
(73) Proprietor: Tenute S.r.l., 20122 Milano (MI) (IT)
(72) Inventor: BERTINI, Mario, 20060 Bellinzago Lombardo (Milano) (IT); NONINO, Gianni, 33100 Udine (IT); RAVANELLI, Raffaello, 25077 Roè Volciano (Brescia) (IT)
(74) Representative: Villanova, Massimo
(86) International application number: PCT/IB2016/053178
(87) International publication number: WO 2016/198988

(56) References cited:
- EP-A1- 1 323 958
- EP-A1- 2 481 959
- EP-B1- 1 888 950
- DE-A1- 3 534 842
- US-A- 3 195 904
- US-A- 3 511 511

## Description

### Background of the invention

The present invention relates to a sealing ring, in particular a front lip sealing ring commonly known as a V-ring.

Seals are known that are made of elastomeric material and consist of an annular body made of flexible material provided with one or more appendages or end lips intended for abutting on a corresponding fixed or movable friction or abutting surface to achieve the static or dynamic seal.

The elastomeric material typically has low hardness that means that the seals are very elastic so as to be able to be mounted on a mechanical element, for example a shaft, having a diameter that is variable within a certain range. In other words, the same seal can be mounted on an element that can have different diameters.

Consequently, it is clear that the inner diameter of the seal and the outer diameter of the element on which it is mounted will not coincide perfectly. To mount the sealing gasket and ensure that in use it remains firmly retained on the shaft, the elasticity and the deformability of the elastomeric material with which the seal is made are exploited.

During mounting, between the inner circumferal wall of the seal (i.e. the wall that surrounds and contacts the element on which it is mounted, i.e. the shaft) and the shaft a connection with interference is made, in which the amount of the interference can also be significant to confer on the seal a certain preload that enables the seal to be retained on the shaft with an appropriate force.

One drawback of these seals is linked to the deformability thereof.

Firstly, during mounting with interference ruffles or folds can form on the annular sealing lip. After a certain initial interval of time that is necessary for the elastomeric material to form on the walls with which the seal comes into contact once it is mounted, the ruffles disappear and the annular sealing lip becomes completely smooth again. Nevertheless, during the initial interval of time, because of the ruffles, the sealing ring does not provide the desired seal, so a leak of liquid can for example occur between the second element and the sealing ring itself.

Secondly, in use, after a certain number of hours of operation, typically the mechanical features of the seal can deteriorate, performance decline, and the seal is no longer able to achieve the seal.

In particular, one of the causes is linked to the increase of the diameter of the inner circumferal wall during operation. In fact, this inner wall is very stressed, both by the preload of the sealing ring that keeps the inner wall pressed against the shaft, and by the force of opposite reaction exerted thereupon by the shaft. Consequently, with use, yielding of the elastomeric material occurs that causes widening of the seal (increase of the diameter of the inner wall thereof), which is no longer preloaded. The seal is thus no longer firmly retained on the shaft and is no longer able to achieve the seal.

A further drawback of known seals is that, in order to ensure a good seal, the shaft on which they are mounted cannot rotate - in use - at very high peripheral speeds. In fact, because of the rotation of the shaft, the seals are subjected to a centrifugal force that tends to move the seals away from the rotating shaft in a manner that is proportional to the peripheral rotation speed. Consequently, this action of the peripheral force means that the seal loses contact with the sliding surface, thus compromising the seal. It should be noted that the low hardness of the elastomeric material, whilst on the one hand it facilitates the mounting of the seal on the shaft, on the other hand promotes the widening of the seal as the mechanical features of the elastomeric material succeed in counteracting only the thrusts due to a centrifugal force of limited amount, i.e. corresponding to low rotation speeds of the shaft.

It also has to be considered that often these sealing rings operate in unfavourable environmental conditions as they may be used in machines or plants in which during operation very high temperatures are reached and maintained, such as, for example, hot rolling plants.

Another drawback is that, in these conditions of use, the high temperatures accentuate the yielding of the elastomeric material, accelerating the decline in performance.

Consequently, in these conditions of use, the seals may have a very short working life and have to be replaced frequently, with a consequent increase in maintenance costs.

In order to overcome these drawbacks, the prior art has developed lip seals in which fixing of the seal to the shaft is ensured by mechanical locking means, for example locking strips. In general, this mechanical locking means comprises outer inserts that are inserted into circumferal grooves obtained in the body of the seals.

One drawback of these seals retained on the shaft by mechanical locking means is that the latter have certain overall dimensions. Consequently, such seals can be mounted only in applications where around the shaft there is a certain volume of minimum space in which the locking means can be positioned. Very frequently, in the machines and plants in which these seals are mounted, the spaces are extremely reduced and it is accordingly not possible to fix the seals to the shaft by the aforesaid mechanical locking means.

Certain embodiments of known lip seals are disclosed in European patent EP 1888950 B1, of the same applicant. The seals disclosed by this European patent comprise an annular body and a sealing lip provided with a contact portion that is coated with self-lubricating materials or materials with a low friction coefficient, in particular with polytetrafluoroethylene (PTFE). In some embodiments, the seals further comprise one or more reinforcement elements that are arranged for stiffening the structure and/or an elastic element (for example a finger spring) that acts on the sealing lip to maintain the sealing lip abutting on the surface contacted by the lip to make the seal.

US 3195904 discloses a seal ring according to the preamble of claim 1.

### Summary of the invention

One object of the invention is to improve known sealing rings, in particular V-rings.

Another object is to increase the reliability and resistance of the sealing rings.

A further object is to limit the deformation of the rings, in particular when they operate in unfavourable operating conditions, as for example when they are subjected to high temperatures.

Still another object is to increase the preload of the sealing lip so as to enable the sealing rings to adhere in an optimum manner to the mechanical element on which the dynamic seal is achieved regardless of operating speed (i.e. of the rotation speed of the element on which the ring is mounted).

One advantage of the invention is that of significantly increasing the working life of a sealing ring, in particular when it is subjected to high temperatures.

Another advantage is to increase the preload that enables the sealing ring to be maintained locked in position on the mechanical element (shaft) on which it is mounted.

A further advantage is to limit significantly the deformations (in particular, the widenings) of the sealing ring caused by the yielding of the elastomeric material, in particular at the inner wall of the ring that surrounds and contacts the mechanical element (the shaft) on which the ring is mounted.

Still another advantage is to make available a sealing ring of reduced overall dimensions that enables the sealing ring to be mounted even in much reduced spaces.

A still further advantage is to reduce maintenance costs because sealing rings have to be replaced less often owing to the significantly long working life thereof. Experimental tests conducted in some applications with high temperature environments such as, for example hot rolling mills, have shown that a sealing ring according to the invention can have a working life that is five to ten times greater than the working life of a prior-art sealing ring.

Such objects and advantages, and also others, are achieved by a sealing ring according to one or more of the following claims.

### Brief description of the drawings

The invention can be understood better and implemented with reference to the attached drawings, which illustrate an embodiment thereof by way of non-limiting example, in which:

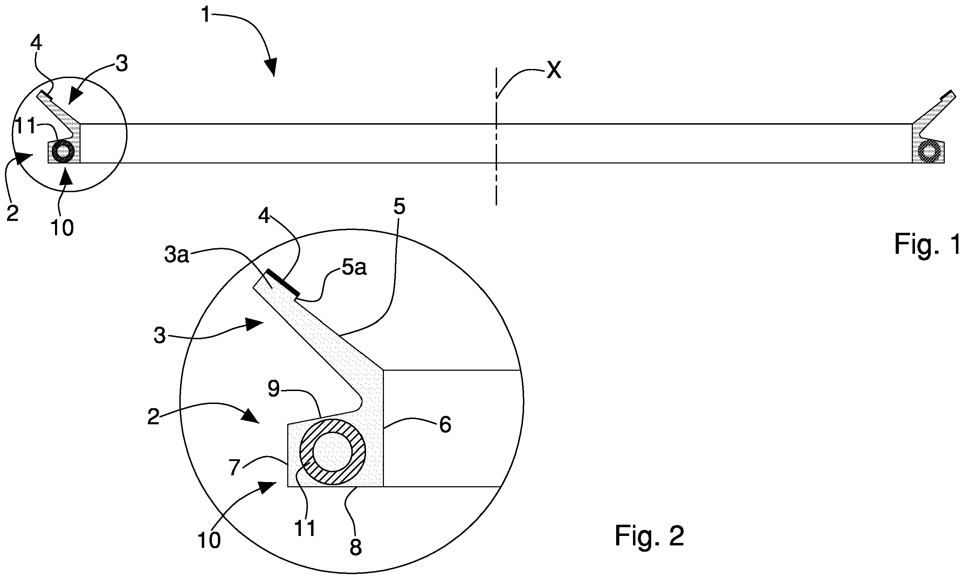

Figure 1 is a section view of a sealing ring according to the invention;
Figure 2 is an enlarged detail of Figure 1.

### Detailed description

With reference to the figures, with 1 overall a sealing ring is indicated, in particular a front lip sealing ring commonly known as a V-ring.

The ring 1 is intended to be mounted on a first element (not shown) that can be movable with a rotary motion around a rotation axis X, for example a shaft.

The ring 1 is thus suitable for making a front seal between the first element (in this embodiment, a shaft) and a second element (not shown), which can be fixed. In general, the first element and the second element are movable with respect to one another.

In the embodiment disclosed here the ring 1 is a front ring, i.e. fixed to the rotating shaft, optionally received in a corresponding seat obtained on the shaft, with the sealing lip that abuts axially on the flat surface of a hub or fixed support.

The ring 1 may be optionally made of rubber or of elastomeric material, for example a thermosetting polymer. The elastomeric material with which the ring is made may have hardness comprised in the range 60° Sh. A - 90° Sh. A, preferably of about 80° Sh. A, i.e. a hardness value that is significantly greater than the typical values that characterise known rings. Owing to the greater hardness of the elastomer, the preload of the sealing lip is increased, such that the ring is able to ensure the dynamic seal even when the shaft rotates at high peripheral speeds, i.e. also in the presence of a high centrifugal force.

The ring 1 comprises an annular fixing portion 2 arranged to maintain the ring locked in position on the first element.

The ring 1 further comprises an annular sealing lip 3 that protrudes from the annular fixing portion 2 to the second element and is provided with a sealing portion 3a suitable for contacting the second element. The annular sealing lip 3 and the annular fixing portion 2 may be optionally made of a single body.

The ring 1 comprises reinforcement means 10 that is at least partially embedded in the annular fixing portion 2. The reinforcement means 10 comprises in turn a toroidal-shaped coiled spring (garter spring 11), which can be optionally made of spring steel. The garter spring 11 is coaxial with the rotation axis X. Owing to the garter spring 11 it is possible to increase significantly the preload that enables the sealing ring to be maintained locked in position on the mechanical element (shaft) on which it is mounted. Further, as the garter spring 11 extends annularly along the entire sealing ring 1, the preload increases homogeneously over the entire extent of the ring.

The ring 1 comprises belt means 4, or coating means, having high wear resistance and a low friction coefficient, which is fixed to the sealing portion 3a so as to coat at least the latter. The belt means 4 may be made of polytetrafluoroethylene (PTFE).

The annular sealing lip 3 comprises a front face 5 facing the second element. The sealing portion 3a is made on the front face 5 and is raised with respect to said face. In this manner the belt means 4 is positioned on a step 5a defined between the front face 5 and the sealing portion 3a. It should be noted that the sealing portion 3a may be extended for less than half of the radial extent of the front face 5.

This configuration of the sealing portion 3a is advantageous as even if the belt means 4 detaches (partially or completely) from some zones of the sealing portion 3a because of wear, the ring 1 would still be able to achieve the dynamic seal between the first element and the second element owing to the step 5a, i.e. owing to the fact that the sealing portion 3a is raised with respect to the front face 5. In other words, the sealing portion 3a is provided with a certain thickness (equal to the height of the step 5a) so as to protrude from the front face 5. This thickness thus ensures the seal even in the absence of the belt means 4.

The annular fixing portion 2 and the annular sealing lip 3 are coaxial relative to the rotation axis X.

The annular fixing portion 2 is bounded by four walls 6, 7, 8 and 9, which comprise first walls 6 and 7 that are substantially parallel to the rotation axis X, and second walls 8 and 9 that are substantially transverse to the same axis.

It should be noted that the garter spring 11 does not protrude outside the walls 6, 7, 8, 9. This arrangement of the garter spring 11, which is completely incorporated inside the annular fixing portion 2, is advantageous as in this manner the presence of the reinforcement means 10 does not increase the overall dimensions of the sealing ring 1. The latter thus has substantially the same overall dimensions as a prior-art sealing ring that is devoid of any reinforcement means.

In the illustrated embodiment, the distance between the periphery of the garter spring 11 and the first walls 6, 7 is greater than the distance between the periphery of the garter spring 11 and the second walls 8, 9. Such distances may be optionally comprised between 0 % and 10% of the diameter of the garter spring 11.

This arrangement of the garter spring 11, which extends over a wide area distributed uniformly in the annular fixing portion 2, is advantageous because it enables the ring 1 to be provided with an optimum preload so as to make the preload very resistant to the yielding of the elastomeric material.

## Claims

1. Sealing ring (1) configured for being mounted on a first element that is movable with rotary motion around a rotation axis (X) and for making an axial seal between said first element and a second element, wherein said elements are movable relative to one another, said sealing ring being made of rubber, or elastomeric material, and comprising:
- an annular fixing portion (2) arranged to maintain the sealing ring (1) locked in position on said first element;
- an annular sealing lip (3) provided with a sealing portion (3a) suitable for contacting said second element, said annular sealing lip (3) being made in a single body with said annular fixing portion (2);
- reinforcement means (10) embedded in said annular fixing portion (2),
**wherein** said reinforcement means (10) comprises a garter spring (11) **that does not protrude outside walls (6,** 7, **8, 9) that bound said annular fixing portion (2);**
**characterized in that a space inside a coil of said garter spring (11) is occupied by the material of said annular fixing portion (2).**

2. Ring according to claim 1, wherein said elastomeric material has hardness comprised in the range 60° Sh. A - 90° Sh. A, in particular hardness of approximately 80° Sh. A.

3. Ring according to claim 1 or 2, comprising belt means (4) having at least high wear resistance and low coefficient of friction and being fixed to said sealing portion (3a) of said annular sealing lip (3), wherein said belt means (4) is made of polytetrafluoroethylene (PTFE).

4. Ring according to claim 3, wherein said belt means (4) is positioned on a step (5a) defined between said sealing portion (3a) and a front face (5) of said annular sealing lip (3) that faces the second element.

5. Ring according to any preceding claim, wherein said sealing portion (3a) is made in a front face (5) of said annular sealing lip (3) that faces the second element.

6. Ring according to claim 5, wherein said sealing portion (3a) is raised with respect to said front face (5).

7. Ring according to claim 5 or 6, wherein said sealing portion (3a) extends for less than half of the radial extent of said front face (5).

8. Ring according to any preceding claim, wherein said annular fixing portion (2) and said annular sealing lip (3) are coaxial relative to said rotation axis (X) of said first element.

9. Ring according to **any preceding** claim-9, wherein a distance between the periphery of said garter spring (11) and first walls (6, 7), comprised in said walls (6, 7, 8, 9) and substantially parallel to said rotation axis (X), is greater than a distance between the periphery of said garter spring (11) and second walls (8, 9), comprised in said walls (6, 7, 8, 9) and substantially transverse to said rotation axis (X).

10. Ring according to claim **9,** wherein said distances are comprised between 0% and 10% of the diameter of said garter spring (11).

11. Use of a sealing ring (1) made according to any preceding claim, wherein the sealing ring (1) is mounted on the first element movable with a rotary motion around the rotation axis (X) and achieves a front seal between the first element and the second element.

## Patentansprüche

1. Dichtungsring (1), der zur Montage an einem ersten Element, das mit einer Drehbewegung um eine Drehachse (X) beweglich ist, und zur Herstellung einer axialen Dichtung zwischen dem ersten Element und einem zweiten Element gestaltet ist, wobei die Elemente relativ zueinander beweglich sind, wobei der Dichtungsring aus Kautschuk oder Elastomermaterial besteht und umfasst:
- einen ringförmigen Befestigungsabschnitt (2), der dazu beschaffen ist, den Dichtungsring (1) in der Position am ersten Element verriegelt zu halten;
- eine ringförmige Dichtungslippe (3), die mit einem Dichtungsabschnitt (3a) versehen ist, der zum Kontaktieren des zweiten Elements geeignet ist, wobei die ringförmige Dichtungslippe (3) in einem einzigen Körper mit dem ringförmigen Befestigungsabschnitt (2) hergestellt ist;
- eine Verstärkungseinrichtung (10), die in den ringförmigen Befestigungsabschnitt (2) eingebettet ist,
wobei die Verstärkungseinrichtung (10) eine Zugfeder (11) umfasst, die nicht außerhalb Wände (6, 7, 8, 9) vorsteht, die den ringförmigen Befestigungsabschnitt (2) begrenzen;
**dadurch gekennzeichnet, dass** ein Raum innerhalb einer Windung der Zugfeder (11) durch das Material des ringförmigen Befestigungsabschnitts (2) belegt ist.

2. Ring nach Anspruch 1, wobei das Elastomermaterial eine Härte, die im Bereich von 60 ° Sh. A - 90° Sh. A liegt, insbesondere eine Härte von ungefähr 80° Sh. A aufweist.

3. Ring nach Anspruch 1 oder 2, der eine Riemeneinrichtung (4) mit zumindest hoher Verschleißbeständigkeit und einem niedrigen Reibungskoeffizienten, die am Dichtungsabschnitt (3a) der ringförmigen Dichtungslippe (3) befestigt ist, umfasst, wobei die Riemeneinrichtung (4) aus Polytetrafluorethylen (PTFE) besteht.

4. Ring nach Anspruch 3, wobei die Riemeneinrichtung (4) auf einer Stufe (5a) angeordnet ist, die zwischen dem Dichtungsabschnitt (3a) und einer vorderen Fläche (5) der ringförmigen Dichtungslippe (3) definiert ist, die dem zweiten Element zugewandt ist.

5. Ring nach einem vorangehenden Anspruch, wobei der Dichtungsabschnitt (3a) in einer vorderen Fläche (5) der ringförmigen Dichtungslippe (3) hergestellt ist, die dem zweiten Element zugewandt ist.

6. Ring nach Anspruch 5, wobei der Dichtungsabschnitt (3a) in Bezug auf die vordere Fläche (5) erhaben ist.

7. Ring nach Anspruch 5 oder 6, wobei der Dichtungsabschnitt (3a) sich auf weniger als der Hälfte der radialen Ausdehnung der vorderen Fläche (5) erstreckt.

8. Ring nach einem vorangehenden Anspruch, wobei der ringförmige Befestigungsabschnitt (2) und die ringförmige Dichtungslippe (3) relativ zur Drehachse (X) des ersten Elements koaxial sind.

9. Ring nach einem vorangehenden Anspruch, wobei ein Abstand zwischen dem Umfang der Zugfeder (11) und ersten Wänden (6, 7), die in den Wänden (6, 7, 8, 9) enthalten sind und zur Drehachse (X) im Wesentlichen parallel sind, größer ist als ein Abstand zwischen dem Umfang der Zugfeder (11) und zweiten Wänden (8, 9), die in den Wänden (6, 7, 8, 9) enthalten sind und zur Drehachse (X) im Wesentlichen quer liegen.

10. Ring nach Anspruch 9, wobei die Abstände zwischen 0 % und 10 % des Durchmessers der Zugfeder (11) liegen.

11. Verwendung eines Dichtungsrings (1), der nach einem vorangehenden Anspruch hergestellt ist, wobei der Dichtungsring (1) am ersten Element montiert ist, das mit einer Drehbewegung um die Drehachse (X) beweglich ist, und eine vordere Dichtung zwischen dem ersten Element und dem zweiten Element erreicht.

## Revendications

1. Bague d'étanchéité (1) configurée pour être montée sur un premier élément qui est mobile avec un mouvement rotatif autour d'un axe de rotation (X) et pour réaliser une étanchéité axiale entre ledit premier élément et un deuxième élément, dans lequel lesdits éléments sont mobiles l'un par rapport à l'autre, ladite bague d'étanchéité se composant de caoutchouc ou d'un matériau élastomère, et comprenant :
- une partie de fixation annulaire (2) disposée pour maintenir la bague d'étanchéité (1) verrouillée en position sur ledit premier élément ;
- une lèvre d'étanchéité annulaire (3) pourvue d'une partie d'étanchéité (3a) apte à venir en contact avec ledit élément, ladite lèvre d'étanchéité annulaire (3) étant d'un seul tenant avec ladite partie de fixation annulaire (2) ;
- des moyens de renforcement (10) encastrés dans ladite partie de fixation annulaire (2),
dans lequel lesdits moyens de renforcement (10) comprennent un ressort jarretière (11) qui ne dépasse pas de parois (6, 7, 8, 9) qui bordent ladite partie de fixation annulaire (2) ;
**caractérisée en ce qu'**un espace à l'intérieur d'une bobine dudit ressort jarretière (11) est occupé par le matériau de ladite partie de fixation annulaire (2).

2. Bague selon la revendication 1, dans laquelle ledit matériau élastomère a une dureté comprise dans la plage de 60° Sh.A à 90° Sh.A, en particulier une dureté d'approximativement 80° Sh.A.

3. Bague selon la revendication 1 ou 2, comprenant des moyens à bande (4) ayant au moins une résistance à l'usure élevée et un faible coefficient de friction et fixés à ladite partie d'étanchéité (3a) de ladite lèvre d'étanchéité annulaire (3), dans laquelle lesdits moyens à bande (4) se composent de polytétrafluoréthylène (PTFE).

4. Bague selon la revendication 3, dans laquelle lesdits moyens à bande (4) sont positionnés sur une marche (5a) définie entre ladite partie d'étanchéité (3a) et une face frontale (5) de ladite lèvre d'étanchéité annulaire (3) qui fait face au deuxième élément.

5. Bague selon l'une quelconque des revendications précédentes, dans laquelle ladite partie d'étanchéité (3a) est réalisée dans une face frontale (5) de ladite lèvre d'étanchéité annulaire (3) qui fait face au deuxième élément.

6. Bague selon la revendication 5, dans laquelle ladite partie d'étanchéité (3a) est relevée par rapport à ladite face frontale (5).

7. Bague selon la revendication 5 ou 6, dans laquelle ladite partie d'étanchéité (3a) s'étend sur moins de la moitié de l'extension radiale de ladite face frontale (5).

8. Bague selon l'une quelconque des revendications précédentes, dans laquelle ladite partie de fixation annulaire (2) et ladite lèvre d'étanchéité annulaire (3) sont coaxiales par rapport audit axe de rotation (X) dudit premier élément.

9. Bague selon l'une quelconque des revendications précédentes, dans laquelle une distance entre la périphérie dudit ressort jarretière (11) et des premières parois (6, 7) comprises dans lesdites parois (6, 7, 8, 9) et sensiblement parallèles audit axe de rotation (X) est plus grande qu'une distance entre la périphérie dudit ressort jarretière (11) et des deuxièmes parois (8,9) comprises dans lesdites parois (6, 7, 8, 9) et sensiblement transversales par rapport audit axe de rotation (X).

10. Bague selon la revendication 9, dans laquelle lesdites distances sont comprises entre 0 % et 10 % du diamètre dudit ressort jarretière (11).

11. Utilisation d'une bague d'étanchéité (1) réalisée selon l'une quelconque des revendications précédentes, dans laquelle la bague d'étanchéité (1) est montée sur le premier élément mobile avec un mouvement rotatif autour de l'axe de rotation (X) et réalise une étanchéité frontale entre le premier élément et le deuxième élément.
